# FASCICULE DE BREVET EUROPEEN

(11) **EP 0 935 868 B1**
(45) Date de publication et mention de la délivrance du brevet: **01.06.2005**
(21) Numéro de dépôt: 97942067.6
(22) Date de dépôt: 19.09.1997
(51) Int. Cl.: H04M 1/72

(54) **DISPOSITIF DE CONNEXION EXCLUSIVE ENTRE UN RESEAU ET UN POSTE D'UTILISATEUR, PAR EXEMPLE ENTRE UN RESEAU DE TELECOMMUNICATION ET UN POSTE TELEPHONIQUE**
VORRICHTUNG FÜR DEN EXCLUSIVEN VERBINDUNGSAUFBAU ZWISCHEN EINEM NETZ UND EINER VERBRAUCHERANLAGE, ZUM BEISPIEL ZWISCHEN EINEM FERNMELDENETZ UND EINEM TELEFONENDGERÄT
DEVICE FOR AN EXCLUSIVE CONNECTION BETWEEN A NETWORK AND A USER STATION, FOR INSTANCE BETWEEN A TELECOMMUNICATION NETWORK AND A TELEPHONE STATION

(30) Priorité: 24.09.1996 FR 9611956
(43) Date de publication de la demande: 18.08.1999
(73) Titulaire: Figueras, Joseph, 06000 Nice (FR); Societe Soujisou Electronique, Rabat (MA); Loubaris, Mohammed Faiçal, Rabat (MA)
(72) Inventeur: LOUBARIS, Mohammed, Faiçal, Rabat (MA)
(74) Mandataire: Bonneau, Gérard
(86) Numéro de dépôt international: PCT/FR1997/001656
(87) Numéro de publication internationale: WO 1998/013985

(56) Documents cités:
- EP-A- 0 217 330
- DE-A- 3 937 181
- DE-A- 4 109 845
- US-A- 5 444 772

## Description

### Domaine technique :

La présente invention a trait aux systèmes dans lesquels des postes d'utilisateur tels que des terminaux de communication en général et des postes téléphoniques en particulier, sont connectés en parallèle sur une même source mais dont un seul peut fonctionner avec la source commune à un instant donné. L'invention concerne particulièrement un dispositif de connexion entre la source et un des postes d'utilisateur excluant toute connexion de la source avec les autres postes.

### Etat de la technique :

Il existe de nombreux systèmes dans lesquels une source de tension est commune à plusieurs postes d'utilisateur, mais où un seul poste peut être connecté à la source à un instant donné à l'exclusion des autres postes. Une telle source peut être une source de tension continue ou alternative ou une source de données numériques ou analogiques telle qu'une ligne téléphonique sur laquelle peuvent se connecter plusieurs postes téléphoniques. Ainsi, le branchement de plusieurs postes téléphoniques sur une ligne commune peut se faire de différentes façons, la plus simple étant un branchement des autres postes en parallèle. Cette solution présente toutefois deux inconvénients majeurs. D'une part, le central téléphonique voit la valeur des paramètres électriques divisés par le nombre de postes placés en parallèle, ce qui pose des problèmes d'adaptation; et d'autre part, il n'est pas possible d'assurer un secret des communications, les postes étant toujours connectés simultanément sur la ligne commune.

Une autre solution consiste à placer un inverseur mécanique. Il n'y a plus de problème d'adaptation, mais l'inconvénient de nécessiter une intervention humaine et donc des déplacements pour le transfert ou la simple commutation d'un poste à l'autre.

Enfin, une dernière solution consiste à installer un inverseur automatique à base de relais électromagnétiques. Malheureusement, les relais miniatures (indispensables dans ce cas) ou sous forme de circuits intégrés, permettent bien de réaliser des commutateurs parfaits mais nécessitent des courants d'excitation relativement élevés. Ainsi, un relais inverseur de 5 volts consomme entre 25 et 30 mA.

La solution du genre pour une ligne commune et deux postes utilisateurs seulement proposée dans le brevet principal DE3937181A utilise des relais spécifiques et un grand nombre de composants électroniques, le brevet DE4109845, donnant une solution dérivée du DE3937181A en le simplifiant, dans la mesure où un des deux postes, le poste principal admet trois fils(a, b et w) et est prioritaire sur le deuxième qui n'a que deux fils (a et b). En plus de la solution encombrante due au nombre important de composants utilisés et la limitation à deux postes utilisateurs seulement et vu que les postes à trois fils datent de la génération des postes à sonnerie électromagnétique et la solution proposée par les deux derniers brevets ne semble pas être économique. Le brevet EP-A-0217330 traite le cas particulier d'un poste utilisateur simple et d'un téléphone sans fil accrochés tous les deux à une ligne téléphonique. La solution de sélection adoptée utilise la détection du courant de boucle par un photo coupleur pour commander un relais non-auto-alimenté par la ligne. Le brevet US-A-5444772 donne par opposition aux trois derniers brevets cités plus haut une solution de conception simple pour connecter un parmi une pluralité de postes utilisateurs placés en parallèles sur une ligne téléphonique commune. Cette solution consiste à placer un dispositif électronique pour chaque poste utilisateur, ce dispositif réagit suivant les niveaux de tensions de la ligne (libre : 48 Volts - prise : 6 Volts). Le dispositif est en série avec le poste utilisateur et pour un poste actif (en communication) le courant de boucle traverse dans le dispositif la photo diode et le phototransistor(Darlington) en même temps ce qui semble être un cas particulier d'une impédance dynamique en série avec celle du poste.

### Exposé de l'invention :

C'est pourquoi le but de l'invention est de fournir un dispositif simple permettant la connexion électronique automatique entre une source et un parmi plusieurs postes d'utilisateur branchés en parallèle sur la source tout en excluant la connexion entre chacun des autres postes et la source.

L'objet de l'invention est donc un dispositif de connexion électronique destiné à connecter à une source de tension commune un poste dédié parmi une pluralité de postes d'utilisateur branchés en parallèle sur la source tout en excluant la connexion des autres postes d'utilisateur à la source, et comprenant pour chaque poste d'utilisateur un moyen de séparation des masses adapté pour séparer la masse du poste dédié des masses des autres postes d'utilisateur, un moyen de connexion électronique pour connecter électroniquement le poste dédié aux bornes de la source de tension commune, et un moyen de commande de déconnexion par isolation galvanique du type photocoupleur pour commander automatiquement la déconnexion électronique sans interaction des autres postes d'utilisateur de la source de tension commune dès que le poste dédié y est connecté.

### Brève description des figures :

Les buts, objets et caractéristiques de l'invention apparaîtront mieux à la lecture des la description qui suit faite en référence aux dessins dans lesquels:
la figure 1 est une représentation schématisée d'un dispositif selon l'invention assurant la connexion entre une source de tension commune et un parmi trois postes téléphoniques,
la figure 2 représente une variante de réalisation de l'élément de détermination du temps de réponse de la cellule illustrée su la figure 1 et permettant des temps de commutation plus précis,
la figure 3 représente l'élément de commande de déconnexion selon une variante du mode de réalisation de l'invention représenté sur la figure 1,
la figure 4 représente schématiquement un système de branchement entre une source et six postes d'utilisateur au moyen de plusieurs dispositifs selon l'invention disposés en plusieurs niveaux, et
la figure 5 représente schématiquement un système de branchement entre une source et quatre postes d'utilisateur au moyen de plusieurs dispositifs selon l'invention disposés en cascade.

### Description détaillée de l'invention :

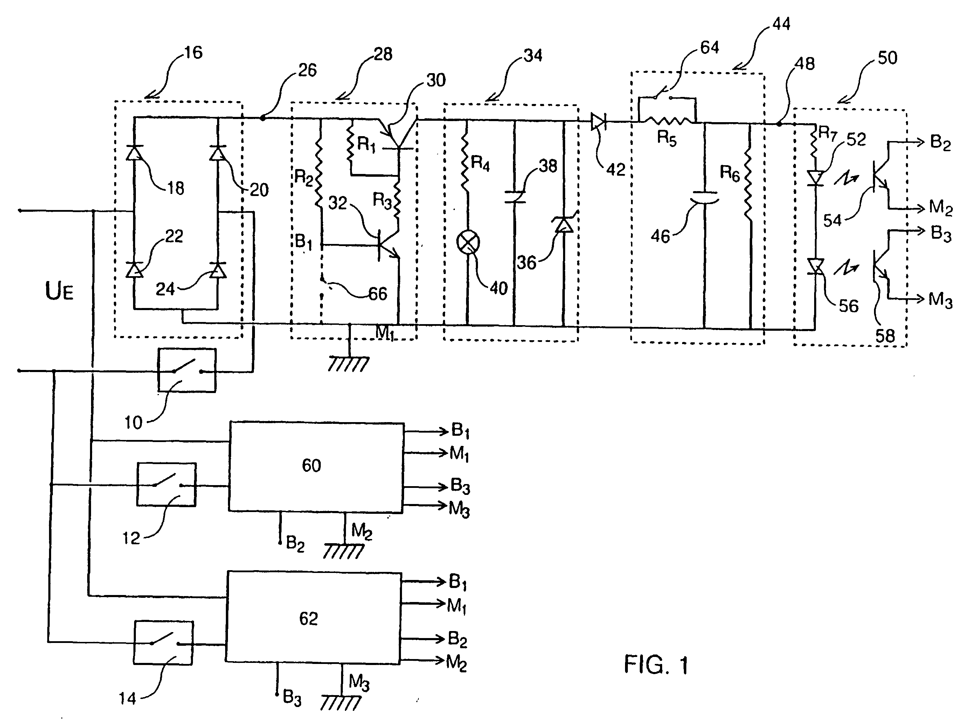

Le système illustré sur la figure 1 et qui permet de mieux comprendre l'invention est par exemple un système téléphonique comportant une ligne téléphonique commune dont la tension (variable) d'entrée est U_{E} et qui peut être connectée à un poste téléphonique parmi trois postes téléphoniques 10, 12 ou 14. Chacun des postes a été représenté par un interrupteur schématisant le poste déconnecté de la ligne tant que le combiné n'a pas été soulevé, le soulèvement du combiné entraînant la fermeture de l'interrupteur.

Du fait qu'il y a trois postes d'utilisateur, le dispositif selon l'invention comprend trois cellules identiques associées à chacun des postes, seule la cellule associée au poste 10 ayant été représentée de façon détaillée.

La description qui suit considère tout d'abord le cas où un poste téléphonique demande la connexion à la ligne commune, en l'occurrence le poste 10 qui sera appelé le poste dédié, par fermeture de son interrupteur de combiné. Une tension est alors appliquée à la première cellule. Cette cellule comprend d'abord un élément de séparation des masses et de redressement 16. L'élément 16 est un pont de diodes 18, 20, 22 et 24 dont le fonctionnement est bien connu.

La sortie 26 (redressée) de l'élément 16 est l'entrée d'un élément de commutation 28 qui fonctionne comme un interrupteur. De manière bien connue, l'élément 28 est formé de deux transistors, un transistor de liaison 30 avec l'élément suivant et un transistor de commutation 32. La base du transistor 30 est connectée à l'entrée 26 par une résistance R₁ et la base du transistor 32 est connectée à l'entrée 26 par la résistance R₂. Lorsqu'une tension positive se trouve à l'entrée 26, le transistor 32 devient conducteur, ce qui entraîne la conduction du transistor 30; et donc un courant circule dans le transistor 30 vers l'élément suivant.

Un circuit est alors établi, soit par la diode 18, l'entrée 26, la résistance R₂, le transistor 32, la masse M₁ et la diode 24 (alternance positive), soit par la diode 20, l'entrée 26, la résistance R₂, le transistor 32, la masse M₁ et la diode 22 (alternance négative). A ce moment là, la connexion est établie entre la ligne téléphonique et le poste 10.

Le troisième élément 34 est principalement un moyen de filtrage du signal et laisse passer le courant de boucle. Il est formé d'une diode Zener 36 en parallèle avec une capacité 38. Une diode électroluminescente (LED) 40 en série avec une résistance R₄ sert à visualiser le poste téléphonique actif, en l'occurrence le poste 10. Comme on vient de le voir, lorsqu'une tension positive est appliquée à l'entrée 26, le transistor 30 devient conducteur, et un courant circule dans la diode Zener 36. Un circuit est alors établi, soit par la diode 18, l'entrée 26, l'émetteur-collecteur du transistor 30, l'élément 34 avec sa diode Zener, la masse M₁ et la diode 24 (alternance positive), soit par la diode 20, l'entrée 26, l'émetteur-collecteur du transistor 30, l'élément 34 avec sa diode Zener, la masse M₁ et la diode 22 (alternance négative). A ce moment là, la connexion est établie entre la ligne téléphonique et le poste 10.

L'élément 34 fournit donc une tension continue de commande et est relié au moyen d'une diode 42 à un élément 44 déterminant le temps de commande de commutation du dispositif. Cet élément est formé d'une résistance R₅ en série avec une capacité polarisée 46, et d'une résistance R₆ en parallèle sur la capacité 46.

Enfin, la sortie 48 de l'élément 44 est connectée à l'entrée d'un élément de commande 50 de déconnexion des autres cellules. Cet élément comprend, en série avec une résistance R₇, autant de photocoupleurs qu'il y a d'autres cellules. Dans l'exemple décrit, il y a donc deux photocoupleurs en série pour chacune des deux autres cellules du système. Chaque photocoupleur est formé d'une diode photo-émettrice et d'un transistor photo-récepteur. Ainsi, le premier photocoupleur est formé de la diode photo-émettrice 56 et du phototransistor 58. Lorsque les diodes photo-émettrices 52 et 56 sont soumises à une tension positive à leur entrée 48, elles rendent conducteurs les phototransistors associés. Chacun des phototransistors étant connecté entre la base du transistor faisant partie de l'élément de commutation dans la cellule correspondante et la masse de cette même cellule, la base dudit transistor prend donc le potentiel de la masse lorsque le phototransistor devient conducteur, ce qui entraîne le blocage, dans l'élément de commutation 28, du transistor 32 ainsi que du transistor 30. Par conséquent, le phototransistor 54 connecté entre les points B₂ et M₂ de la deuxième cellule, déconnecte totalement celle-ci de la source, et le phototransistor 58 connecté entre les points B₃ et M₃ de la troisième cellule, déconnecte cette dernière de la source de la même façon. Ainsi, il est certain que, lorsque le poste d'utilisateur 10 est connecté à la source U_{E}, les deux autres postes d'utilisateur 12 et 14 se trouvent déconnectés de cette même source.

Bien qu'elles ne soient pas représentées en détail, les deux autres cellules 60 pour le poste d'utilisateur 12 et 62 pour le poste d'utilisateur 14, comportent les mêmes circuits que la première cellule. Comme on le voit sur la figure, les bornes des deux phototransistors de la cellule 60 sont connectées respectivement aux points B₁ et M₁ de la première cellule et aux points B₃ et M₃ de la cellule 62. Ce qui signifie par exemple que, si le poste d'utilisateur 12 décroche, les transistors de commutation des deux autres cellules sont bloqués du fait que leur base est connectée à la masse (B₁ connectée à M₁ et B₃ connectée à M₃).

Il est bon de revenir à l'élément 44 qui détermine le temps de réponse. En effet, ce temps de réponse est déterminé par la valeur des résistances R₅ et R₆ ainsi que de la valeur de la capacité 46 et de la valeur d'impédance de l'élément 50. De façon générale, la valeur du temps de réponse à définir dépend de la nature de système ou de l'application utilisée. Dans le cas présent de postes téléphoniques, le temps de réponse (ou de commutation) doit être inférieur au temps de réponse de la ligne téléphonique. On doit d'ailleurs noter qu'il existe un temps de réponse de déblocage lorsque l'utilisateur raccroche le combiné. Le temps de réponse de blocage t_{b} est égal au produit des valeurs de la résistance R₅ et de la capacité C (pour R₅ faible par rapport à l'impédance équivalente de R₆ en parallèle avec l'élément 50), alors que le temps de réponse de déblocage t_{d} est égal au produit des valeurs de la résistance R₆ et de la capacité C (pour R₆ faible par rapport à la résistance équivalente vue à l'entrée 48). On choisit donc R₅ bien inférieure à R₆, et on calcule la valeur de la capacité C pour que les temps de réponse soient par exemple:
t_{b} = 2 ms
t_{d} = 20 ms.

Ainsi, les temps de réponse sont suffisamment inférieurs au temps de réponse de 300ms de la ligne téléphonique, des coupures de flashs comprises entre 100ms et 200ms, et des impulsions de numérotation de 33/66ms, de manière à ce que le central téléphonique réagisse le mieux possible aux commandes.

Il est possible que la poste téléphonique qui a le temps de réponse le plus faible, donc celui qui se connecte électroniquement sur la ligne, ne soit pas le poste demandé. Il suffit alors à l'utilisateur dudit poste connecté d'avertir l'utilisateur du poste demandé qui décroche alors son combiné téléphonique et se trouve connecté à la ligne lorsque le combiné du premier poste est raccroché.

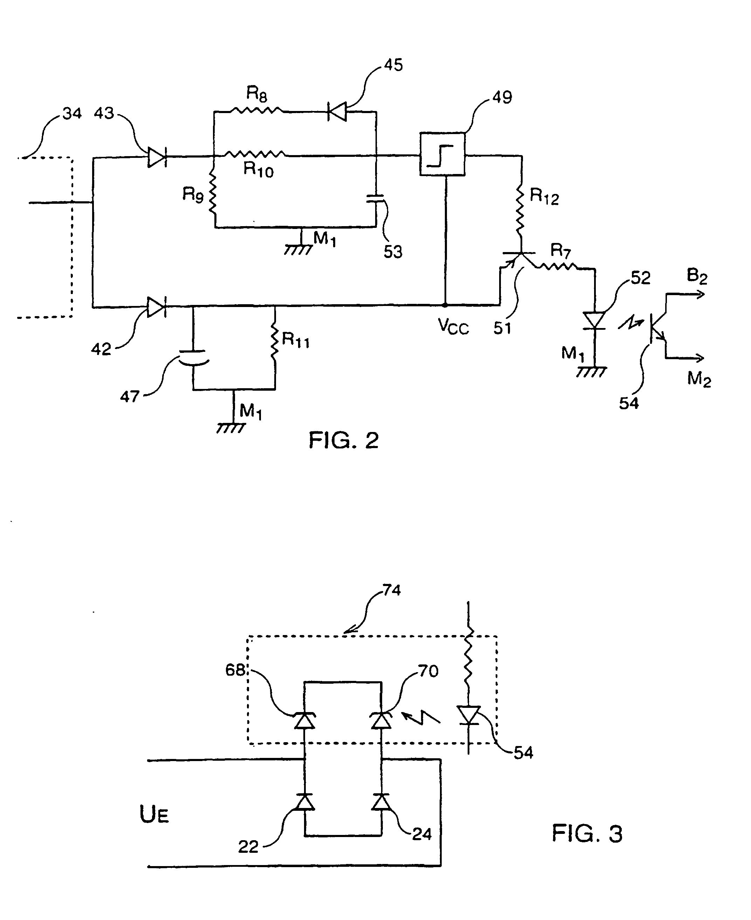

Pour des utilisations autres qu'un système téléphonique, et qui demandent des temps de commutation plus précis, il est judicieux de remplacer l'élément 44 de détermination de temps de réponse de la cellule par le circuit illustré sur la figure 2. Dans ce circuit, la sortie de l'élément 34 fournissant une tension continue par l'intermédiaire de la diode 42, sert à charger une capacité réservoir 47. La tension aux bornes de cette capacité en parallèle avec la résistance R₁₁ fournit la tension d'alimentation V_{cc}. Simultanément, une capacité 53 est chargée de façon exponentielle à travers la diode 43 et la résistance R₁₀. Quand la tension aux bornes de la capacité 53 atteint un seuil positif Vₜ+, cette tension appliquée à l'entrée d'un circuit trigger 49 (par exemple CD 40106) provoque le basculement de ce dernier de la tension V_{cc} à la masse et rend ainsi conducteur un transistor 51 dont la base est connectée au circuit 49 au moyen d'une résistance R₁₂ et l'émetteur est connecté à la tension V_{cc} fournie par la capacité 47. On doit noter que la valeur de la capacité 47 (par exemple 470µF) est choisie pour que son temps de décharge soit largement supérieur à celui de la capacité 53. A ce moment là, les diodes photo-émettrices de l'élément photocoupleur 50 (par exemple la diode 52) sont activées et rendent conducteurs les transistors photo-récepteurs (par exemple le transistor 54). Le temps de réponse de blocage t_{b} est donc déterminé par les valeurs de la résistance R₁₀, de la capacité 53 et de Vt+.

A la suppression de la tension continue à la sortie de l'élément 34, la capacité 53 se décharge de façon exponentielle a travers la résistance R₁₀ en parallèle avec l'ensemble formé par la diode 45 en série avec la résistance R₈, et la résistance R₉ connectée à la masse. Quand la tension aux bornes de la capacité 53 atteint le seuil négatif Vₜ-, le circuit trigger 49 bascule de la masse à la tension V_{cc} et bloque ainsi le transistor. A ce moment là, les diodes photo-émettrices de l'élément photocoupleur 50 (par exemple la diode 52) sont desactivées et bloquent les transistors photo-récepteurs (par exemple le transistor 54). Le temps de réponse de déblocage t_{d} est donc déterminé par les valeurs de la résistance R₁₀, des résistances R₈, R₉ en parallèle avec R₁₀, de la capacité 53 et de Vₜ-.

La description qui précède concerne le cas où un des postes d'utilisateur demande la connexion à la ligne. Il faut également prévoir le cas où la ligne demande la connexion à un des postes 10, 12 ou 14. La détermination du temps de réponse de chaque cellule permet d'avoir un poste dédié, c'est à dire que ce poste a un temps de réponse inférieur aux temps de réponse des autres postes, et ainsi, c'est ce poste dédié qui se connecte à la ligne commune alors que les autres postes sont déconnectés. Pour obtenir ceci, il suffit de choisir la valeur de la résistance R₅ de l'élément 44 associé au poste dédié inférieure aux valeurs des résistances R₅ des autres cellules de façon à déterminer le plus petit temps de réponse. Dans le cas particulier de l'application à des postes téléphoniques, c'est la sonnerie du poste dédié qui est activée. Ceci étant, il est également possible de placer un interrupteur 64 en parallèle sur chacune des résistances R₅. Ainsi, pour donner la priorité de connexion à un poste, il suffira de fermer l'interrupteur 64 de la cellule associée audit poste.

Une variante du dispositif décrit consiste à prévoir une déconnexion manuelle du poste en plaçant un interrupteur 66 entre les points B₁ et M₁. Cet interrupteur, lorsqu'il est fermé, empêche toute connexion de la source avec le poste d'utilisateur associé puisque le point B1 est relié à la masse M1. Ceci peut être utile lorsque l'on désire mettre un poste d'utilisateur en sommeil pour une raison quelconque.

Une autre variante du dispositif, illustré sur la figure 3, consiste à remplacer les deux diodes 18 et 20 de l'élément de séparation des masses 16 par deux thyristors photo-récepteurs 68 et 70 commandés directement par les diodes photo-émettrices, ici la diode 54 des photocoupleurs. Dans ce cas, l'élément de commande de déconnexion 74 représenté en pointillés sur la figure intègre une partie de l'élément de séparation des masses. En fonctionnement, l'activation des photocoupleurs de la cellule associée au poste dédié entraîne le blocage des thyristors des autres cellules et donc la déconnexion totale desdites cellules.

Beaucoup d'applications du dispositif de l'invention sont possibles dans le domaine des communications. Ainsi, on peut envisager un système comportant plusieurs télécopieurs tous utilisés pour émettre des télécopies, mais dont un seul (le poste dédié) est utilisé pour recevoir les télécopies dans la mesure où c'est toujours lui qui se connecte sur la ligne en premier lorsqu'il y a un appel.

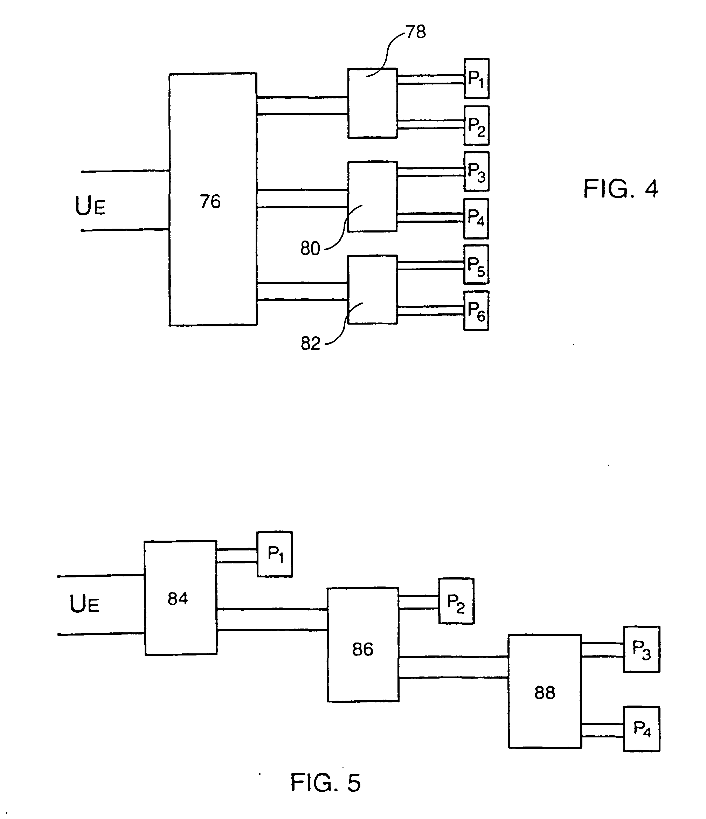

Le dispositif selon l'invention peut aussi être utilisé pour des applications dans lesquelles la source de tension commune est une source d'alimentation. Il peut s'agir par exemple de la commande de moteurs branchés sur la même source d'alimentation mais où un seul moteur doit fonctionner à un instant donné. Ce peut être également la commande de postes d'arrosage automatique à fonctionnement consécutif. Il reste bien entendu que certaines adaptations du dispositif, à la portée de l'homme du métier, seront nécessaires si les paramètres électriques de la source sont importants. Dans le mode de réalisation qui vient d'être décrit en référence à la figure 1, la source de tension, c'est à dire ici la ligne téléphonique, est branchée directement à trois postes d'utilisateur. Cependant, il est possible de remplacer un ou plusieurs des postes 10, 12 ou 14 par un dispositif selon l'invention. Ainsi, somme illustré sur la figure 4, le dispositif de connexion 76 selon l'invention est branché directement à trois autres dispositifs 78, 80 et 82 également selon les principes de l'invention. Ces trois dispositifs permettent la connexion des postes téléphoniques P₁, P₂ pour le dispositif 78, des postes P₃, P₄ pour le dispositif 80 et des postes P₅, P₆ pour le dispositif 82. Par conséquent, cette architecture permet de connecter la ligne d'entrée U_{E} à l'un parmi six postes téléphoniques.

Il est également possible de combiner dans un même système un poste d'utilisateur et un dispositif selon l'invention, et ceci plusieurs fois consécutives pour obtenir un montage en cascade comme illustré sur la figure 5. Ainsi le dispositif de connexion 84 permet la connexion de la ligne d'entrée U_{E}, soit au poste P1, soit à un deuxième dispositif de connexion 86. A son tour, le dispositif de connexion 86 permet la connexion, soit au poste P₂, soit à un troisième dispositif de connexion 88 qui est branché à deux postes P₃ et P₄. Par conséquent, cette architecture permet la connexion de la ligne d'entrée UE à l'un des postes P₁, P₂, P₃ ou P₄.

On doit noter que l'application envisagée et le nombre de postes d'utilisateur à placer en parallèle déterminent la valeur des composants et en particulier la valeur de la diode Zener de l'élément 34 (voir figure 1), dans la mesure où chacun des photocoupleurs placés en série absorbe une différence de potentiel constante (environ 1,4 volts). Ainsi, avec un dispositif à deux cellules, on a besoin que d'un seul photocoupleur. Par conséquent, la tension à obtenir aux bornes de la diode Zener peut être par exemple de 2,7 volts. Par contre, avec un montage comportant quatre postes d'utilisateur en parallèle, il faudra utiliser quatre cellules comportant chacune trois photocoupleurs en série. C'est donc une tension de plus de 5 volts qu'il faut prévoir aux bornes de la diode Zener.

Il est bon de mentionner également que l'affaiblissement du signal de la boucle de connexion dans la cellule du poste connecté est négligeable du fait que le transistor 30 présente des paramètres très faibles en régime saturé.

On doit noter qu'en mettant les postes d'utilisateur en cascade, le nombre de postes est limité à cause de la chute de tension provoquée par les cellules en série (à peu près 4 volts pour une tension de 2,7 volts aux bornes de la diode Zener). Ainsi, dans le cas d'une ligne téléphonique de tension d'entrée égale à 50 volts et en tenant compte du fait que le central doit voir une impédance statique minimale lorsque les postes sont raccrochés (ce qui limite le nombre de postes en parallèle), le nombre de postes téléphoniques montés selon l'architecture de la figure 4 peut être de 15, ceci en tenant compte du très faible affaiblissement dynamique du signal pour chaque cellule comme il a été mentionné précédemment.

## Revendications

1. Dispositif de connexion électronique destiné à connecter électroniquement à une source de tension commune (UE) un poste dédié (10) parmi une pluralité de postes d'utilisateur (10, 12, 14) branchés en parallèle sur la source, et comprenant pour chacun desdits postes d'utilisateur une cellule avec un moyen de séparation des masses (16) adapté pour séparer électroniquement la masse (M1) dudit poste dédié des masses (M2, M3) des autres postes d'utilisateur, un moyen de connexion électronique (28) pour connecter électroniquement ledit poste dédié aux bornes de la source de tension commune, et un moyen de commande de déconnexion (50) par isolation galvanique du type photo coupleur à photodiodes pour commander automatiquement la déconnexion électronique des autres postes d'utilisateur de la source de tension commune dès que le poste dédié y est connecté, provoquant le passage de courant dans cette cellule dans les photodiodes (52, 56) qui rendent conducteurs les phototransistors correspondants (54, 58) appartenant respectivement aux cellules à commander (60, 62), et provoquant le blocage d'un transistor de liaison (30), respectivenent la déconnexion des postes d'utilisateur (12, 14).

2. Dispositif selon la revendication 1, comprenant autant de cellules que ladite pluralité de postes d'utilisateur (10, 12, 14);
chacune des cellules comprenant en série:
- un élément de séparation des masses (16),
- un élément de connexion électronique (28) pour connecter électroniquement les bornes dudit poste dédié aux bornes de ladite source de tension (U_{E}),
- un élément de filtrage du signal et de restitution de tension continue (34),
- un élément de détermination de temps de réponse (44) de la cellule, et
- un élément de commande de déconnexion (50) comprenant des photocoupleurs en série (52, 54, et 56, 58) pour commander la déconnexion électronique de ladite source des autres cellules du dispositif.

3. Dispositif selon la revendication 2, dans lequel le temps de réponse fourni par ledit élément de détermination de temps de réponse (44) est déterminé par un circuit de type RC dont les valeurs peuvent être différentes selon les cellules, la cellule associée audit poste dédié (10) ayant un temps de réponse inférieur au temps de réponse des autres cellules de façon à connecter ledit poste dédié à ladite source de tension (U_{E}).

4. Dispositif selon la revendication 3, dans lequel au moins une desdites cellules comporte un interrupteur (64) connectée en parallèle aux bornes de la résistance (R5) du circuit RC de façon à pouvoir dédier le poste associé à ladite cellule par fermeture dudit interrupteur.

5. Dispositif selon l'une des revendications 2 à 4, dans lequel ledit élément de séparation des masses (16) est un pont de quatre diodes (18, 20, 22, 24) assurant également un redressement de la tension appliquée par ladite source (U_{E}) lorsque cette tension est alternative.

6. Dispositif selon la revendication 5, dans lequel deux des quatre diodes (18, 20, 22, 24) dudit élément de séparation des masses (16) sont remplacées par deux thyristors photo-récepteurs et ledit élément de commande de déconnexion (50) de chaque cellule est formé de diodes photo-émettrices en série dont l'activation commande le blocage des thyristors des autres cellules.

7. Dispositif selon la revendication 2, 3, ou 4, dans lequel ledit élément de connexion électronique (28) comprend un transistor de commutation (32) qui, lorsqu'il est conducteur, entraîne la conduction d'un transistor de liaison (30) assurant le passage du courant vers ledit élément de filtrage (34) et ainsi la connexion dudit poste dédié à ladite source (U_{E}).

8. Dispositif selon la revendication 7, dans lequel la base dudit transistor (32) dudit élément de connexion électronique (28) est connectée à la masse (M₁) de la cellule par un interrupteur (66) normalement ouvert mais qui peut être fermé manuellement pour empêcher la connexion électronique du poste associé à ladite source (U_{E}).

9. Dispositif selon l'une des revendications 2 à 8, dans lequel ledit élément de détermination de temps de réponse (44) de la cellule comprend un circuit trigger (49) déterminant de façon très précise le temps de réponse de blocage (t_{b}) correspondant à l'activation dudit élément de commande de déconnexion (50) ainsi que le temps de réponse de déblocage (t_{d}) correspondant à la désactivation dudit élément de commande de déconnexion, le basculement dudit circuit trigger étant commandé par le chargement et le déchargement d'une capacité (58) selon qu'une tension continue est restituée ou non par ledit élément de filtrage de signal et de restitution de tension continue (34).

10. Système téléphonique comprenant une ligne téléphonique commune (U_{E}) pouvant être connectée à un parmi une pluralité de postes téléphoniques (10, 12, 14) ladite connexion étant réalisée au moyen d'un dispositif selon l'une des revendications 1 à 9.

11. Système de commande de fonctionnement d'un moteur dédié parmi une pluralité de moteurs lorsqu'une source de tension commune (U_{E}) est connectée aux bornes dudit moteur dédié, ladite connexion étant réalisée au moyen d'un dispositif selon l'une des revendications 1 à 9.

12. Système de connexion électronique entre une source de tension (U_{E}) et une pluralité de postes utilisateurs (P₁, P₂, P₃, P₄) dans laquelle la connexion d'au moins un desdits postes est réalisée par l'intermédiaire de plusieurs dispositifs (84, 86, 88) selon l'une des revendications 1 à 9.

## Patentansprüche

1. Elektronische Schaltvorrichtung, die eine gemeinsame Spannungsquelle (Ue) und eine (10) aus mehreren parallel geschalteten Benutzerstellen (10, 12, 14) elektronisch verbindet, und worin jede Benutzerstelle eine Zelle zugewiesen ist die, ein Mittel zur Massentrennung (16) um die Masse M1 der genannten Benutzerstelle aus der Massen (M2, M3) der übrigen Benutzerstellen elektronisch zu trennen, ein Mittel zum elektronischen Schalten (28) um elektronisch die genannte Benutzerstelle mit der gemeinsamen Spannungsquelle zu verbinden, ein Mittel zur Sperrkontrolle (50) mit galvanischer Trennung durch photodioden-optokopplers zur elektronischen und automatischen Trennung der übrigen Benutzerstellen aus der gemeinsamen Spannungsquelle sobald die genannte Benutzerstelle verbunden ist, was in deren Zelle das Durchfließen eines Stromes durch die Photodioden (52, 56) hervorruft und die entsprechenden Phototransistoren (54, 58), die entsprechend der zu sperrenden Zellen (60, 62) gehören, in die Sättigung bringen, somit die Sperrung des Verbindungstransistors (30) und infolgedessen die Trennung der entsprechenden Benuzerstellen (12, 14) aus der gemeinsamen Spannungsquelle hervorrufen.

2. Vorrichtung nach Anspruch 1, enthält soviel Zellen wie die Anzahl der Benuzerstellen (10, 12, 14) ist, jede Zelle enthält in Serie, ein Mittel zur Massentrennung (16), ein Mittel zum elektronischen Schalten (28) um elektronisch die genannte Benuzerstelle mit der gemeinsamen Spannungsquelle (Ue) zu verbinden, ein Mittel um das Filtern des Signals und die Herstellung der Gleichspannung (34), ein Mittel zur Bestimmung der Verzögerungszeit (44) der Zelle und ein Mittel zur Sperrkontrolle (50) gebildet mit Optokopplers in Serie (52, 54, und 56, 58) zur elektronischen Trennung der genannten Spannungsquelle aus der übrigen Zellen der Vorrichtung.

3. Vorrichtung nach Anspruch 2, worin das Mittel zur Bestimmung der Verzögerungszeit (44) durch eine RC Schaltung gegeben ist, deren Werte je nach Zelle verschieden sein können, die Zelle in Verbindung mit der genannten Stelle (10) wird mit der niedrigen Verzögerungszeit in bezug auf die anderen Zellen behaftet, um diese Stelle mit der genannten Spannungsquelle (Ue) zu verbinden.

4. Vorrichtung nach Anspruch 3, worin mindestens eine der genannten Zellen einen Schalter (64), der parallel zu dem Widerstand (R5) der RC Schaltung angelegt ist, um die Verbraucherstelle der entsprechenden Zelle als Fehlbenutzerstelle anzusetzen sobald der Schalter geschlossen ist.

5. Vorrichtung nach einem der Ansprüche 2 bis 4, worin das genannte Mittel zur Massentrennung (16) eine Brücke mit vier Dioden (18, 20, 22, 24), die auch im Fall einer gelegten Wechselspannung durch die genannte Quelle (Ue), deren Gleichrichtung führt.

6. Vorrichtung nach Anspruch 5, worin zwei der vier Dioden (18, 20, 22, 24) des genannten Mittel zur Massentrennung (16) mit zwei Fotoempfaenger-Thyristoren ersetzt sind, und worin die genannte Sperrschaltung (50) von jeder Zelle mit Fotosende-Dioden in Serie gegründet ist, deren Aktivierung das Sperren der Thyristoren der anderen Zellen hervorruft.

7. Vorrichtung nach Anspruch 2, 3, oder 4, worin das genannte Mittel zum elektronischen Schalten (28) ein Schalttransistor (32) enthält, der im fall seiner Sättigung, die Durchschaltung des Verbindungstransistors (30) hervorruft, und damit das Fliessen eines Stromes im Filterelement (34) lässt, was die Verbindung der genannten Stelle mit der Quelle (Ue) herstellt.

8. Vorrichtung nach Anspruch 7, worin die Basis des genannten Transistors (32) des elektronischen Verbindungsmittel (28) durch einen Schalter (66), der im normalen Zustand offen ist, zur Masse (M1) der Zelle mit manueller Schließung gelegt sein kann, was in diesem Zustand die Verbindung der entsprechenden Benutzerstelle zur genannten Quelle (Ue) verhindert.

9. Vorrichtung nach einem der Ansprüche 2 bis 8, worin das Mittel zur Bestimmung der Antwortzeit (44) der Zelle eine Triggerschaltung ist, die genau die Verzögerungssperrzeit (tb) und die Verzögerungsentsperrzeit (td) während entsprechend das Ansetzen und Absetzen des Elementes der Sperrkontrolle (50) bestimmt, und wobei das Kippen der Triggerschaltung durch das Auf und Entladen eines Kondensators (58) ermittelt ist, je nachdem ob beziehungsweise eine Gleichspannung durch die Filterschaltung (34) hergestellt oder abgebaut wird.

10. Telefonsystem, das eine gemeinsame Anschlusslinie (Ue), die eine aus mehreren Telefonstellen (10, 12, 14) verbindet, diese Verbindung wird durch eine Vorrichtung nach einem der Ansprüche 1 bis 9 realisiert.

11. Steuerungssystem zum Verbinden eines gegebenen aus mehreren Motoren an eine gemeinsame Spannungsquelle (Ue), diese Verbindung wird durch eine Vorrichtung nach einem der Ansprüche 1 bis 9 realisiert.

12. Elektronischer Schaltsystem zwischen einer Spannungsquelle (Ue) und eine Vielheit von Benutzerstellen (P1, P2, P3, P4) in dem die Verbindung von mindestens eine aus der genannten Stellen durch mehrere Vorrichtungen (84, 86, 88) nach einem aus den Ansprüchen 1 bis 9 realisiert ist.

## Claims

1. Electronic means of connection to electrically connect a common source of voltage(Ue) to a choosen user station (10) between a plurality of user stations (10, 12, 14), placed in parallel to the common source and comprising each one one cell with a means of separation of grounds (16) to separ electronically the ground (M1) of the choosen user station and the gounds (M2, M3) of the others user stations, an electronic means of connection (28) to connect electronically the choosen user station to the common source of voltage, a means of disconnection command (50) with galvanic insulation insurs with photodiode optical couplers automatically the electronic control of disconnection of the other user stations to the common source of voltage, since the choosen user station are connected to the common source, insuring in this cell the flowing of current in the photodiodes (52, 56), which saturate the correspondants phototransistors (54, 58) located respectivelly in the commanded cells(60, 62) and which block the ballast transistor (30) and therefore insuring respectivelly the disconnection of the user stations (12, 14).

2. Device according to claim 1, comprising as much cells as the plurality of user stations (10, 12, 14); each cell comprising in serie :
- a means of separation of grounds (16),
- a means of electronically connection (28) to connect electronically the pins of the sayed user station to the pins of the sayed source of voltage (Ue),
- a means for filtering a signal and for restitution of direct voltage (34),
- a means for determination of the response time (44) of the cell, and
- a means of disconnection command (50) comprising optical couplers in serie (52, 54, et 56, 58) to control electronically the disconnection of the source of voltage to the others cells of the device.

3. Device according to claim 2, wherein the response time, gived by the means for determination of the response time (44), is determined by a circuit RC which values can be different according to the cells, the cell associated to the choosen user station (10) has a response time inferior to that of the other cells, in order to connect the choosen user station to the source of voltage.

4. Device according to claim 3, in which at least one of the sayed cells comprizes one switch (64) connected in parallel to the pins of the resistor (R5), and when the switch is closed, the cell's user station becomes the default user station.

5. Device according to one of the claims 2 to 4 wherein the sayed means of separation of grounds (16) is a bridge of four diodes (18, 20, 22, 24) insuring also the rectifing of the applicated voltage of the sayed voltage source when it is alternative.

6. Device according to claim 5, wherein two of the four diodes (18, 20, 22, 24) of the sayed means of the separation of grounds (16) are remplaced with two opto-receiver thyristors and the sayed means of disconnection control (50) of each cell includs opto-emitter diodes in serie and if there are activated, they insure the blocking of the thyristors of the other cells.

7. Device according to the claims 2, 3, or 4 wherein the sayed means of connection (28) has one switching transistor (32), when it conducts, the ballast transistor (30) will be satureted, causing electric current to flow through the means for filtering the signal (34), causing the electrical connection of the choosen user station with the sayed source (Ue).

8. Device according to claim 7, wherein the base of the sayed transistor (32) of the sayed means of electronic connection (28) can be connected with a ground by a switch normally open, the switch when manually closed blocking the electronic connection of the associated station with the sayed source (Ue).

9. Device according to the claims 2 to 8, wherein the means for determination of the response time (44) of the cell includes a trigger circuit (49) which determines much preciselly a response time of the blocking (tb), corresponding to the activation of the sayed means of disconnection (50) and also the response time of disblocking (td) corresponding to the desactivation of the sayed means of disconnection , the output of the trigger circuit is contolled by a charging and a discharging of a capacitor (58), depending respectively of the restitution or the taking down of the direct voltage by the sayed means for filtering a signal and for the restitution of the direct voltage (34).

10. Telefonsystem comprising one common telefonline (Ue), which can be connected to one of a plurality of telefonstations (10, 12, 14), the sayed connection is realised with a devise according to the claims 1 to 9.

11. Controlsystem of a choosen motor among a plurality of motors when a common source of voltage (Ue) is connected to the pins of the choosen motor, the sayed connection is realised according with one of the claims 1 to 9.

12. Electronic connection system of a source of voltage (Ue) and a plurality of user stations (P1, P2, P3, P4) wherein the connection of at least one of the sayed stations is realised by many devices (84, 86, 88) according to the claims 1 to 9.
